(19) Europäisches Patentamt
European Patent Office
Office européen des brevets

(11) **EP 2 648 018 B1**

(12) **EUROPEAN PATENT SPECIFICATION**

(45) Date of publication and mention
of the grant of the patent:
**15.10.2014 Bulletin 2014/42**

(51) Int Cl.:
***G01S 19/20*** *(2010.01)*

(21) Application number: **12002388.2**

(22) Date of filing: **02.04.2012**

(54) **An improved RAIM algorithm**

Verbesserter RAIM-Algorithmus

Algorithme RAIM amélioré

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.10.2013 Bulletin 2013/41**

(73) Proprietor: **Airbus DS GmbH
82024 Taufkirchen (DE)**

(72) Inventor: **Trautenberg, Hans L., Dr.
50823 Köln (DE)**

(74) Representative: **Avenhaus, Beate
Airbus Defence and Space GmbH
Patentabteilung
81663 München (DE)**

(56) References cited:
**EP-A1- 2 402 785**

• KAPLAN E D: "UNDERSTANDING GPS:
PRINCIPLES AND APPLICATIONS",
UNDERSTANDING GPS PRINCIPLES AND
APPLICATIONS, XX, XX, 1 January 1996
(1996-01-01), pages 306-314, XP002044171,
• OEHLER V ET AL: "The Galileo Integrity
Concept", ION GNSS. INTERNATIONAL
TECHNICAL MEETING OF THE
SATELLITEDIVISION OF THE INSTITUTE OF
NAVIGATION, WASHINGTON, DC, US, 21
September 2004 (2004-09-21), pages 604-615,
XP002375520,

**Description**

TECHNICAL FIELD

The invention relates to a RAIM (Receiver Autonomous Integrity Monitoring) algorithm according to claim 1.

BACKGROUND

RAIM (Receiver Autonomous Integrity Monitoring) provides integrity monitoring of a GNSS (Global Navigation Satellite System) to GNSS receivers. RAIM algorithms process GNSS signals and are based on statistical methods, with which faulty GNSS signals can be detected. Enhanced RAIM algorithms allow not only fault detection (FD) of any received GNSS signal, but also exclusion of a GNSS signal being detected as faulty from positioning, thus allowing a continuous operation of a GNSS receiver. This is known as fault detection and exclusion (FDE).
The non-pre-published European patent application no. 10006518.4 describes an improved RAIM algorithm employable in a GNSS receiver, wherein the algorithm is particularly suitable to fulfill the requirements as outlined by the by ICAO (International Civil Aviation Organization) for CAT-I.
For acceptance of a RAIM algorithm by users, the users must have sufficient confidence in the calculation of the integrity risk with the algorithm. The integrity concept of the planned European GNSS GALILEO provides the dissemination of statistical descriptions with specific confidences. The statistical descriptions describe characteristics of possible errors of a SIS (Signal in Space), for example probabilities of the occurrence of errors, and comprise parameters for describing the possible error characteristics. In GALILEO, the disseminated statistical descriptions comprise as parameters for describing the possible error characteristics SISA (Signal In Space Accuracy) values for each satellite. The SISA of a satellite is determined in the ground segment of GALILEO and is a prediction of the minimum standard deviation of a Gaussian distribution, that over-bounds the SISE (Signal In Space Error) distribution of a fault-free SIS (Signal In Space) of a GALILEO satellite. A detailed description of the integrity concept of GALILEO can be found in "The Galileo Integrity Concept", V. Oehler, F. Luongo, J.-P. Boyero, R. Stalford, H. L. Trautenberg, ION GNSS 17 th International Technical Meeting of the Satellite Division, 21-24 Sept. 2004, Long Beach, CA. The confidence in the determination of the integrity risk parameter SISA is about 1-1 E-4. However, this confidence usually does not suffice in order to achieve integrity risks in the range of about 1E-7 with a RAIM algorithm.
A description of the principles underlying RAIM can be found in the publication KAPLAN E D: "UNDERSTANDING GPS: PRINCIPLES AND APPLICATIONS", UNDERSTANDING GPS PRINCIPLES AND APPLICATIONS, XX, XX, 1 January 1996 (1996-01-01), pages 306-314, XP002044171.

SUMMARY OF INVENTION

Thus, it is an object of the invention to provide an improved RAIM algorithm employable in a GNSS receiver, wherein the algorithm allows increasing the confidence in an integrity risk calculated with the algorithm compared to known RAIM algorithms.
This object is achieved by the subject matter of the independent claims. Further embodiments are shown by the dependent claims.
A basic idea underlying the present invention is the determination of a subgroup of "fault-free" ranging signals from all received "fault-free" ranging signals and to determine the integrity risk by using this subgroup. Thus, the confidence in the determination of the integrity risk may be increased since the statistical description of an overall positioning solution is only wrong if at least two "fault-free" ranging signals of all received "fault-free" ranging signals are indeed statistically "not correct". Thus, the invention uses redundancy contained in the received "fault-free" ranging signals in order to increase the confidence in the process of determining the integrity risk. The invention can in principle applied to every GNSS, in which ranging signals are disseminated, and wherein particularly the disseminated ranging signals contain a statistical description determining the ranging signals as being faulty or fault-free, such as GALILEO ranging signals supporting the SoL (Safety-of-Life) Services offered by GALILEO.
An embodiment of the invention relates to a RAIM algorithm for determining an integrity risk in a GNSS by processing several ranging signals received from satellites of the GNSS wherein the algorithm comprises the following acts:

• determining a first group of ranging signals from received ranging signals for determining the integrity risk, wherein a statistical description of each ranging signal of the first group determines the ranging signals as being fault-free,

• selecting from the first group of ranging signals at least one ranging signal assuming that the statistical description of this ranging signal is not correct,

- determining a second group of ranging signals from the first group by removing the selected at least one ranging signal from the first group of ranging signals, and

- determining the integrity risk as the maximum of the integrity risks of all possibilities calculated from the second group of ranging signals at the alert limit.

The determining of the integrity risk may comprise bounding the integrity risk at the alert limit $P_{HMI}$ by the maximum of the maximum of all fault free integrity risks at the alert limit minus $d_{n,i}$ $P_{HMI,fm}$ and the fault free integrity risk $P_{HMI,ff}$ according to the following formula:

$$p_{HMI} = \max\left(p_{HMI,ff}, p_{HMI,fm}\right) + p_{mf}$$

wherein $d_{n,i}$ is the test statistics for the detection of a fault on satellite $n$ in direction $i$, and $P_{mf}$ is the probability that more than one ranging signal is faulty.

The fault free integrity risl $P_{HMI,ff}$ may becalculated according to the following formula:

$$p_{HMI,ff} = \begin{pmatrix} \max_{n \in N}\left(\left(\prod_{\substack{m=1 \\ n \neq m}}^{N} K'_m\right)\left(\sum_{i=1}^{I}\left(1 - erf\left(\frac{AL_i - \mu'_{S_{n,i}}}{\sqrt{2}\sigma'_{S_{n,i}}}\right)\right)\right)\right) + \\ 1 - \prod_{m=1}^{N}\left(p_{\mu'_m} \cdot p_{\sigma'_m}\right) - \sum_{m=1}^{N}\left(1 - p_{\mu'_m} \cdot p_{\sigma'_m}\right)\prod_{\substack{n=1 \\ n \neq m}}^{N}\left(p_{\mu'_m} \cdot p_{\sigma'_m}\right) \end{pmatrix}$$

with

$$\mu'_{S_{n,i}} = \sum_{m=1}^{N}\left\|\left(\mathbf{S}_{n,i}\right)_m\right\|_2 \mu'_m$$

and

$$\sigma'_{S_{n,i}} = \sum_{m=1}^{N}\left(\left(\mathbf{S}_{n,i}\right)_m \sigma'_m\right)^2$$

wherein $AL_i$ is an Alert Limit.

The maximum of the maximum of all fault free integrity risks at the alert limit minus $P_{HMI,fm}$ may be calculated according to the following formula:

$$p_{HMI,fm} = \max_{n=1..N}\left(p_{HMI,fm,n}\right)$$

with

$$p_{HMI,fm,n} = \begin{pmatrix} \max_{o \in N} \left( \left( \left( \prod_{\substack{m=1 \\ n \neq m \\ o \neq m}}^{N} K'_m \right) \left( \sum_{i=1}^{I} \left( 1 - erf\left( \frac{AL_i - d_{n,i} - \mu'_{S_{n,o,i}}}{\sqrt{2}\sigma'_{S_{n,o,i}}} \right) \right) \right) \right) \right) + \\ 1 - \prod_{\substack{m=1 \\ m \neq n}}^{N} \left( p_{\mu'_m} \cdot p_{\sigma'_m} \right) - \sum_{\substack{m=1 \\ m \neq n}}^{N} \left( 1 - p_{\mu'_m} \cdot p_{\sigma'_m} \right) \prod_{\substack{o=1 \\ o \neq m \\ o \neq n}}^{N} \left( p_{\mu'_o} \cdot p_{\sigma'_o} \right) \end{pmatrix}$$

with

$$\mu'_{S_{n,o,i}} = \sum_{m=1}^{N} \left\| \left( S_{n,o,i} \right)_m \right\|_2 \mu'_m$$

and

$$\sigma'_{S_{n,o,i}} = \sum_{m=1}^{N} \left( \left( S_{n,o,i} \right)_m \sigma'_m \right)^2$$

wherein $AL_i$ is an Alert Limit.

According to a further embodiment of the invention, a computer program may be provided, which implements an algorithm according to the invention and as described above and enabling the determining of an integrity risk in a GNSS when executed by a computer. The computer program may be for example installed on a computing device with a receiver for ranging signals from a GNSS, for example ranging signal from NAVSTAR-GPS and/or the upcoming European GNSS GALILEO and/or Russian GNSS GLONASS and/or Chinese GNSS KOMPASS.

According to a further embodiment of the invention, a record carrier storing a computer program according to the invention may be provided, for example a CD-ROM, a DVD, a memory card, a diskette, or a similar data carrier suitable to store the computer program for electronic access.

A yet further embodiment of the invention provides a receiver for ranging signals from the satellite of a GNSS, comprising

•   a memory storing a computer program of the invention and as described before and

•   a processor being configured by the stored computer program to process received ranging signals with the algorithm implemented by the computer program.

The receiver may be for example integrated in a mobile device such as a mobile navigation device, a smartphone, a tablet computer, or a laptop.

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1    shows a flowchart of an embodiment of the RAIM algorithm according to the invention;

Fig. 2    shows the formula for the calculation of the fault free integrity risk ($P_{HMI,ff}$) according to the invention;

Fig. 3    shows the formula for the calculation of the maximum of the maximum of all fault free integrity risks at the (alert limit minus $d_{n,i}$) ($P_{HMI,fm}$) according to the invention.

DESCRIPTION OF EMBODIMENTS

In the following, an embodiment of the inventive RAIM algorithm is explained. The RAIM algorithm processes ranging signals received at a certain position from satellites of a GNSS. A received ranging signal is also called a measurement. Another common term for a received ranging signal is pseudorange measurement.
The RAIM algorithm processes the information contained in the received ranging signals in order to provide integrity monitoring for applications such as aviation. If the RAIM algorithm detects a faulty ranging signal, it may issue a warning to a user for example a pilot by providing an alert.
For CAT-I, the ICAO has outlined several requirements for GPS, which should be fulfilled by RAIM algorithms. The requirements refer to availability, accuracy, integrity, and continuity of a GNSS based positioning service.
According to ICAO, integrity is defined as a measure of the trust that can be placed in the correctness of the information supplied by the total system. Integrity includes the ability of a system to provide timely and valid warnings to the user (alerts) when the system must not be used for the intended operation (or phase of flight).
To describe the integrity performance the following parameters are used:

- Alert Limit: For a given parameter measurement, the error tolerance not to be exceeded without issuing an alert.
- Time-to-Alert: The maximum allowable time elapsed form the onset of the navigation system being out of tolerance until the equipment enunciates the alert.
- Integrity Risk: Probability that a warning is not provided within the Time-to-Alert after the Alert Limit has been exceeded.

The definitions for the terms Alert Limit and Time-to-Alert can be found on "International Standards and Recommended Practices Aeronautical Telecommunications Annex 10 to the Convention on International Civil Aviation Volume I (Radio Navigation Aids) (Amendments until amendment 84 have been considered)", Sixth Edition, July 2006. The definition for the term Integrity Risk is for example specified in the GALILEO system requirements.

Position Error Model

For the basic understanding of the inventive RAIM algorithm the Position Error Model is explained in the following.
It is assumed that the position solution is derived by a weighted least square algorithm. It is further assumed that the linearized relation between the position-time error $\Delta\mathbf{x}$ and the range errors $\Delta\mathbf{r}$ is given by

$$\Delta\mathbf{x}_0 = \mathbf{S}_0\Delta\mathbf{r} \quad (0.1)$$

where

$$\mathbf{S}_0 = \left(\mathbf{G}^\mathbf{T}\mathbf{W}_\xi\mathbf{G}\right)^{-1}\mathbf{G}^\mathbf{T}\mathbf{W}_\xi \quad (0.2)$$

where $\mathbf{G}$ is the design matrix and $\mathbf{W}_\xi$ is a diagonal matrix whose n-th diagonal element is a function of the satellite range error model $\xi$ and the airborne error model assumed for the n-th satellite. $N$ is the number of ranges in the position

solution associated with $S_0$.

For GPS $\xi = URA$ (User Range Accuracy) and it is

$$\left(\mathbf{W}_{URA}\right)_{n,n} = \frac{1}{\left(URA_n\right)^2 + \left(\sigma_{n,user}\right)^2 + \left(\sigma_{n,tropo}\right)^2} \quad (0.3)$$

For GALILEO $\xi = SISA$ (Signal In Space Accuracy) and it is

$$\left(\mathbf{W}_{SISMA}\right)_{n,n} = \frac{1}{\left(SISA_n\right)^2 + \left(\sigma_{n,user}\right)^2 + \left(\sigma_{n,tropo}\right)^2} \quad (0.4)$$

wherein

$\sigma_{n,user}$ accounts for multipath and user receiver noise.
$\sigma_{n,tropo}$ accounts for mismodelling of the troposphere.

In the current description it is assumed that the ionosphere is corrected by dual frequency measurements. If this is not the case the mismodelling of the ionosphere has to be added like the troposphere missmodelling above.

The position error model for the position solution, where n-th satellite has been removed is given by

$$\Delta\mathbf{x}_n = \mathbf{S}_n\Delta\mathbf{r} \quad (0.5)$$

where

$$\mathbf{S}_n = \left(\mathbf{G}^T\mathbf{M}_n\mathbf{W}_\xi\mathbf{G}\right)^{-1}\mathbf{G}^T\mathbf{M}_n\mathbf{W}_\xi \quad (0.6)$$

with $M_n$ being the identity matrix where the element (n,n) is set to zero.

The position error model for the position solution, where n-th and m-th satellite has been removed is given by

$$\Delta\mathbf{x}_{n,m} = \mathbf{S}_{n,m}\Delta\mathbf{r} \quad (0.7)$$

where

$$\mathbf{S}_{n,m} = \left(\mathbf{G}^T\mathbf{M}_{n,m}\mathbf{W}_\xi\mathbf{G}\right)^{-1}\mathbf{G}^T\mathbf{M}_{n,m}\mathbf{W}_\xi \quad (0.8)$$

with $\mathbf{M}_{n,m}$ being the identity matrix where the elements (n,n) and (m,m) are set to zero.

Position Separation RAIM Algorithm

In the following, the position separation as applied by the inventive RAIM algorithm is explained.

The test statistics for the detection of a fault on satellite $n$ is

$$d_n = \max_{\substack{m \in N \\ m \neq n}} \left( \Delta \mathbf{x}_{n,m} - \Delta \mathbf{x}_0 \right) \quad (0.9)$$

or more precisely, as the test statistics is in every spatial direction independent,

$$d_{n,i} = \max_{\substack{m \in N \\ m \neq n}} \left( \mathbf{e}_i^T \left( \Delta \mathbf{x}_{n,m} - \Delta \mathbf{x}_0 \right) \right) \equiv \max_{\substack{m \in N \\ m \neq n}} \left( \left( \Delta \mathbf{x}_n - \Delta \mathbf{x}_0 \right)_i \right)$$

$$(0.10)$$

where $\mathbf{e}_i$ is the unit vector in direction $i$. $i$ can take the values east, north or up, or any other value a user is interested in.

According to the invention, the satellite $m$ is not considered faulty, it is just considered that the fault free description of satellite $m$ is not correct.

With the definition of $\Delta S_n$ and $\Delta S_{n,m}$ as follows

$$\Delta \mathbf{x}_n - \Delta \mathbf{x}_0 = \left( \mathbf{S}_n - \mathbf{S}_0 \right) \Delta \mathbf{r} \equiv \Delta \mathbf{S}_n \Delta \mathbf{r} \quad (0.11)$$

$$\Delta \mathbf{x}_{n,m} - \Delta \mathbf{x}_0 = \left( \mathbf{S}_{n,m} - \mathbf{S}_0 \right) \Delta \mathbf{r} \equiv \Delta \mathbf{S}_{n,m} \Delta \mathbf{r}$$

$$(0.12)$$

it can be written

$$d_{n,i} = \max_{\substack{m \in N \\ m \neq n}} \left( \mathbf{e}_i^T \Delta \mathbf{S}_{n,m} \Delta \mathbf{r} \right) \equiv \Delta \mathbf{S}_{n,m,i} \Delta \mathbf{r} \quad (0.13)$$

Integrity Risk

Next, the integrity risk determination according to the inventive RAIM algorithm is explained.

Only one received ranging signal is considered as faulty. In addition another signal is considered as fault free, but the statistical description of this signal is considered as not correct. Therefore one of the $\Delta \mathbf{x}_{n,m,i}$ is the difference between the fault free solution with $N$ - 2 signals where the confidence in the correct statistical description of the fault free signals is no longer given as product of the confidences in the statistical distribution of the individual ranging signals, but is higher, as it is already considered that one fault free signal might not be described statistically correct, and the (faulty or fault free solution) with $N$ signals. The integrity risk at the alert limit ($P_{HMI}$) is therefore bounded by the maximum of the maximum of all fault free integrity risks at the (alert limit minus $d_{n,i}$) ($P_{HMI.fm}$) and the fault free integrity risk ($P_{HMI,ff}$).

$$p_{HMI} = \max\left(p_{HMI,ff}, p_{HMI,fm}\right) + p_{mf} \quad (0.14)$$

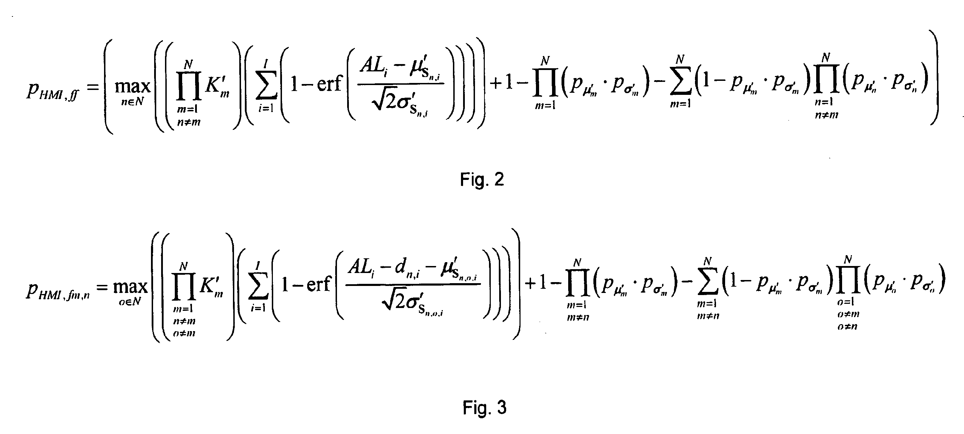

Fig. 2 shows the formula for the calculation of $p_{HMf,ff}$ (0.15)
Fig. 3 shows the formula for the calculation of $p_{HMf,fm,n}$ (0.16)

$$p_{HMI,fm} = \max_{n=1..N}\left(p_{HMI,fm,n}\right) \quad (0.17)$$

with

$$\mu'_{S_{n,o,i}} = \sum_{m=1}^{N}\left\|\left(S_{n,o,i}\right)_m\right\|_2 \mu'_m \quad (0.18)$$

and

$$\sigma'_{S_{n,o,i}} = \sum_{m=1}^{N}\left(\left(S_{n,o,i}\right)_m \sigma'_m\right)^2 \quad (0.19)$$

and

$$\mu'_{S_{n,i}} = \sum_{m=1}^{N}\left\|\left(S_{n,i}\right)_m\right\|_2 \mu'_m \quad (0.20)$$

and

$$\sigma'_{S_{n,i}} = \sum_{m=1}^{N}\left(\left(S_{n,i}\right)_m \sigma'_m\right)^2 \quad (0.21)$$

and

$$\mu'_{S_{0,i}} = \sum_{m=1}^{N}\left\|\left(S_{0,i}\right)_m\right\|_2 \mu'_m \quad (0.22)$$

and

$$\sigma'_{\mathbf{S}_{0,i}} = \sum_{m=1}^{N} \left( \left( \mathbf{S}_{0,i} \right)_m \sigma'_m \right)^2 \quad (0.23)$$

The primes indicate that the over-bounding might be different from the over-bounding used for the computation of the alert probabilities. As the integrity risk is smaller than the alert probability most likely the probabilities $P_{\mu'_n} \cdot P_{\sigma'_n}$ have to be larger than the $P_{\mu_n} \cdot P_{\sigma_n}$ used for continuity and accuracy, which in turn result in possible larger $\mu'_m$, $\sigma'$ and $K'$ compared to the unprimed versions.

$P_{ff}$ is the probability that all ranging signals are fault free.

$P_{fm}$ is the probability that any one and only one of the signals is faulty.

$P_{mf}$ is the probability that more than one ranging signal is faulty.

If it is not of interest to bound the integrity risk for a specific interval but on average, a bound for the average integrity risk can be computed with

$$p_{avHMI} = p_{ff} p_{HMI,ff} + \sum_{n=1}^{N} p_{fm,n} p_{HMI,fm,n} + p_{mf}$$

$$(0.24)$$

Tuning of the Detection Threshold

Detection thresholds can be tuned such that the availability which is basically the sum of the false alert probability $P_{fa}$ and the fraction of instances where the integrity risk at the alert limit computed with either (0.14) or (0.24) is above or equal to the tolerable integrity risk, where the $d_{n,i}$ are replaced by $D_{n,i}$ for the evaluation of (0.14) respectively (0.24), is minimized. Depending of the definition of availability different sets of instances have to be used.

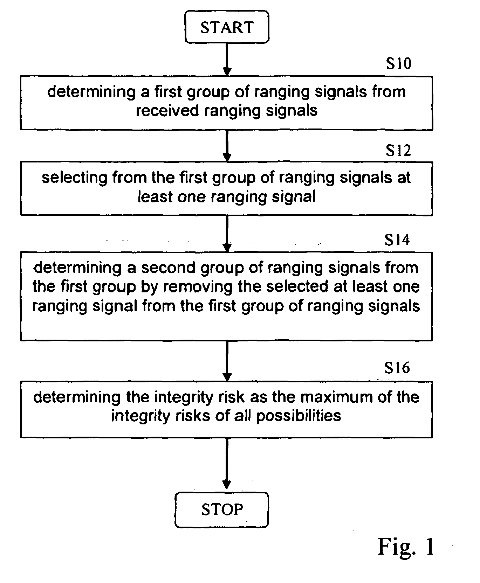

Fig. 1 shows a flowchart of the inventive RAIM algorithm. In step S10, a first group of ranging signals from received ranging signals is determined. With each ranging signal, a statistical description of the quality of the ranging signal with regard to the integrity risk can be received, for example a SISA value. The statistical value of each ranging signal of the first group determines the ranging signals as being fault-free. Thus, the first group contains only ranging signals assessed as fault-free.

In the following step S12, the algorithm selects from the first group of ranging signals, determined in step S10, one or more ranging signals, for which it is assumed that their statistical description is faulty, i.e. that the statistical description of these selected ranging signals is not correct. For example, all ranging signals with the most critical SISA values among the SISA values of the first group's ranging signals can be selected. This can be performed for example by selecting ranging signals with a SISA value, which is below a certain threshold defined by the algorithm.

After selecting at least one ranging signal from the first group, a second group of ranging signals is determined by removing the selected ranging signals from the first group in step S14. The second group is a subset of the first group.

In step S16, the integrity risk is then determined as the maximum of the integrity risks of all possibilities calculated from the second group of ranging signals at the alert limit, refer above to the computation formulas with (0.14) or (0.24).

The present invention particularly allows to achieve a sufficient confidence in the determination of the integrity risks in a GNSS with a RAIM algorithm, even if the confidence in the correct determination of the statistical description of a ranging signal such as in the SISA value is no sufficient to fulfill requirements of the RAIM algorithm.

Claims

1. A RAIM method for determining an integrity risk in a GNSS by processing several ranging signals received from satellites of the GNSS wherein the method comprises the following acts:

  • determining a first group of ranging signals from received ranging signals for determining the integrity risk (S10), wherein a statistical description of each ranging signal of the first group determines the ranging signals as being fault-free,

- selecting from the first group of ranging signals at least one ranging signal assuming that the statistical description of this ranging signal is not correct (S12),
- determining a second group of ranging signals from the first group by removing the selected at least one ranging signal from the first group of ranging signals (S14), and
- determining the integrity risk as the maximum of the integrity risks of all possibilities calculated from the second group of ranging signals at the alert limit (S16).

2. The method of claim 1, wherein the determining of the integrity risk comprises bounding the integrity risk at the alert limit $P_{HMI}$ by the maximum of the maximum of all fault free integrity risks at the alert limit minus $d_{n,i}$ $P_{HMI,fm}$ and the fault free integrity risk $P_{HMI,ff}$ according to the following formula:

$$p_{HMI} = \max\left(p_{HMI,ff}, p_{HMI,fm}\right) + p_{mf}$$

wherein $d_{n,i}$ is the test statistics for the detection of a fault on satellite n in direction $i$, and $P_{mf}$ is the probability that more than one ranging signal is faulty.

3. The method of claim 2, wherein $P_{HMI,ff}$ is calculated according to the following formula:

$$p_{HMI,ff} = \left( \begin{array}{c} \max_{\substack{n \in N}} \left( \left(\prod_{\substack{m=1 \\ n \neq m}}^{N} K'_m \right) \left( \sum_{i=1}^{I} \left( 1 - erf\left( \frac{AL_i - \mu'_{S_{n,i}}}{\sqrt{2}\sigma'_{S_{n,i}}} \right) \right) \right) \right) + \\ 1 - \prod_{m=1}^{N} \left( p_{\mu'_m} \cdot p_{\sigma'_m} \right) - \sum_{m=1}^{N} \left( 1 - p_{\mu'_m} \cdot p_{\sigma'_m} \right) \prod_{\substack{n=1 \\ n \neq m}}^{N} \left( p_{\mu'_m} \cdot p_{\sigma'_m} \right) \end{array} \right)$$

with

$$\mu'_{S_{n,i}} = \sum_{m=1}^{N} \left\| \left(S_{n,i}\right)_m \right\|_2 \mu'_m$$

and

$$\sigma'_{S_{n,i}} = \sum_{m=1}^{N} \left( \left(S_{n,i}\right)_m \sigma'_m \right)^2 \quad ,$$

wherein $AL_i$ is an Alert Limit.

4. The method of claim 2 or 3, wherein $P_{HMI,fm}$ is calculated according to the following formula:

$$p_{HMI,fm} = \max_{n=1..N} \left( p_{HMI,fm,n} \right)$$

with

$$p_{HMI,fm,n} = \left( \begin{array}{c} \max_{o \in N} \left( \left( \prod_{\substack{m=1 \\ n \neq m \\ o \neq m}}^{N} K'_m \right) \left( \sum_{i=1}^{I} \left( 1 - erf\left( \frac{AL_i - d_{n,i} - \mu'_{S_{n,o,i}}}{\sqrt{2}\sigma'_{S_{n,o,i}}} \right) \right) \right) \right) + \\ 1 - \prod_{\substack{m=1 \\ m \neq n}}^{N} \left( p_{\mu'_m} \cdot p_{\sigma'_m} \right) - \sum_{\substack{m=1 \\ m \neq n}}^{N} \left( 1 - p_{\mu'_m} \cdot p_{\sigma'_m} \right) \prod_{\substack{o=1 \\ o \neq m \\ o \neq n}}^{N} \left( p_{\mu'_o} \cdot p_{\sigma'_o} \right) \end{array} \right)$$

with

$$\mu'_{S_{n,o,i}} = \sum_{m=1}^{N} \left\| \left( S_{n,o,i} \right)_m \right\|_2 \mu'_m$$

and

$$\sigma'_{S_{n,o,i}} = \sum_{m=1}^{N} \left( \left( S_{n,o,i} \right)_m \sigma'_m \right)^2$$

wherein $AL_i$ is an Alert Limit.

5. A computer program implementing an method according to any of the preceding claims and enabling the determining of an integrity risk in a GNSS when executed by a computer.

6. A record carrier storing a computer program according to claim 5.

7. A receiver for ranging signals from the satellite of a GNSS, comprising

- a memory storing a computer program of claim 5 and
- a processor being configured by the stored computer program to process received ranging signals with the method implemented by the computer program.

**Patentansprüche**

1. RAIM-Verfahren zum Bestimmen eines Integritätsrisikos in einem GNSS durch Verarbeiten verschiedener, von Satelliten des GNSS empfangener Ranging-Signale, wobei das Verfahren folgende Vorgänge aufweist:

- Bestimmen einer ersten Gruppe von Ranging-Signalen aus empfangenen Ranging-Signalen zum Bestimmen des Integritätsrisikos (S10), wobei eine statistische Beschreibung jedes Ranging-Signals der ersten Gruppe die Ranging-Signale als fehlerfrei bestimmt,
- Auswählen aus der ersten Gruppe von Ranging-Signalen wenigstens eines Ranging-Signals unter der Annahme, dass die statistische Beschreibung dieses Ranging-Signals (S12) nicht korrekt ist,
- Bestimmen einer zweiten Gruppe von Ranging-Signalen aus der ersten Gruppe durch Entfernen des ausgewählten wenigstens einen Ranging-Signals aus der ersten Gruppe von Ranging-Signalen (S14), und
- Bestimmen des Integritätsrisikos als das Maximum der Integritätsrisiken von allen aus der zweiten Gruppe von Ranging-Signalen an der Alarmgrenze (S16) berechneten Möglichkeiten sind.

2. Verfahren nach Anspruch 1, wobei das Bestimmen des Integritätsrisikos ein Einschießen des Integritätsrisikos an der Alarmgrenze $P_{HMI}$ durch das Maximum des Maximums aller fehlerfreien Integritätsrisiken an der Alarmgrenze minus $d_{n,i}$ $P_{HMI,fm}$ und den fehlerfreien Integrätätsrisiken an der Alarmgrenze minus $P_{HMI,ff}$ gemäß der folgenden Formel:

$$p_{HMI} = \max\left(p_{HMI,ff}, p_{HMI,fm}\right) + p_{mf}$$

aufweist, worin $d_{n,i}$ die Teststatistik für die Erkennung eines Fehlers an Satellit $n$ in der Richtung $i$ und $P_{mf}$ die Wahrscheinlichkeit, dass mehr als ein Ranging-Signal fehlerhaft ist, bezeichnet.

3. Verfahren nach Anspruch 2, wobei $P_{HMI,ff}$ gemäß folgender Formel berechnet wird:

$$p_{HMI,ff} = \left( \begin{array}{c} \max_{n \in N}\left(\left(\prod_{\substack{m=1 \\ n \neq m}}^{N} K'_m\right)\left(\sum_{i=1}^{I}\left(1 - erf\left(\frac{AL_l - \mu'_{S_{n,i}}}{\sqrt{2}\sigma'_{S_{n,i}}}\right)\right)\right)\right) + \\ 1 - \prod_{m=1}^{N}(p_{\mu'_m} \cdot p_{\sigma'_m}) - \sum_{m=1}^{N}(1 - p_{\mu'_m} \cdot p_{\sigma'_m})\prod_{\substack{n=1 \\ n \neq m}}^{N}(p_{\mu'_m} \cdot p_{\sigma'_m}) \end{array} \right)$$

mit

$$\mu'_{S_{n,i}} = \sum_{m=1}^{N}\left\|(s_{n,i})_m\right\|_2 \mu'_m$$

und

$$\sigma'_{S_{n,i}} = \sum_{m=1}^{N}\left((S_{n,i})_m \sigma'_m\right)^2,$$

worin $AL_i$ eine Alarmgrenze bezeichnet .

4. Verfahren nach Anspruch 2 oder 3, wobei $P_{HMI,fm}$ gemäß folgender Formel berechnet wird:

$$p_{HMI,fm} = \max_{n=1..N}\left(p_{HMI,fm,n}\right)$$

mit

$$p_{HMI,fm,n} = \left( \begin{array}{c} \max_{o \in N} \left( \left( \prod_{\substack{m=1 \\ n \neq m \\ o \neq m}}^{N} K'_m \right) \left( \sum_{i=1}^{I} \left( 1 - erf\left( \frac{AL_i - d_{n,i} - \mu'_{S_{n,o,i}}}{\sqrt{2}\sigma'_{S_{n,o,i}}} \right) \right) \right) \right) + \\ 1 - \prod_{\substack{m=1 \\ m \neq n}}^{N} \left( p_{\mu'_m} \cdot p_{\sigma'_m} \right) - \sum_{\substack{m=1 \\ m \neq n}}^{N} \left( 1 - p_{\mu'_m} \cdot p_{\sigma'_m} \right) \prod_{\substack{o=1 \\ o \neq m \\ o \neq n}}^{N} \left( p_{\mu'_o} \cdot p_{\sigma'_o} \right) \end{array} \right)$$

mit

$$\mu'_{S_{n,o,i}} = \sum_{m=1}^{N} \left\| \left( \mathbf{S}_{n,o,i} \right)_m \right\|_2 \mu'_m$$

und

$$\mu'_{S_{n,o,i}} = \sum_{m=1}^{N} \left\| \left( \mathbf{S}_{n,o,i} \right)_m \right\|_2 \mu'_m$$

worin $AL_i$ eine Alarmgrenze bezeichnet.

5. Computer-Programm, das bei Ausführen durch einen Computer ein Verfahren nach einem der vorhergehenden Ansprüche implementiert und das Bestimmen eines Integritätsrisikos in einem GNSS ermöglicht.

6. Datenträger, der ein Computer-Programm nach Anspruch 5 speichert.

7. Empfänger für Ranging-Signale vom Satelliten eines GNSS, aufweisend:

- einen Speicher, auf dem ein Computer-Programm nach Anspruch 5 gespeichert ist, und
- einen Prozessor, der von dem gespeicherten Computer-Programm konfiguriert wird, empfangene Ranging-Signale mit dem durch das Computer-Programm implementierten Verfahren zu verarbeiten.

**Revendications**

1. Procédé RAIM pour déterminer un risque d'intégrité dans un GNSS en traitant plusieurs signaux de mesure de distance reçus de satellites du GNSS où le procédé comprend les étapes suivantes :

déterminer un premier groupe de signaux de mesure de distance à partir de signaux de mesure de distance reçus pour déterminer le risque d'intégrité (S10), où une description statistique de chaque signal de mesure de distance du premier groupe détermine les signaux de mesure de distance comme étant fiable, sélectionner, dans le premier groupe de signaux de mesure de distance, au moins un signal de mesure de distance supposant que la description statistique de ce signal de mesure de distance n'est pas correcte (S12), déterminer un second groupe de signaux de mesure de distance, à partir du premier groupe, en retirant l'au moins un signal de mesure de distance sélectionné du premier groupe de signaux de mesure de distance (S14), et déterminer le risque d'intégrité comme étant le maximum des risques d'intégrité de toutes les possibilités calculées à partir du second groupe de signaux de mesure de distance à la limite d'alerte (S16).

2. Procédé selon la revendication 1, dans lequel la determination du risque d'intégrité comprend de limiter le risque d'intégrité à la limite d'alerte $P_{HMI}$ par le maximum du maximum de tous les risques d'intégrité filables à la limite d'alerte moins $d_{n,i}$ $P_{HMI,fm}$ et le risque d'intégrité fiable $P_{HMI,ff}$ conformément à la formule suivante :

$$P_{HMI} = \max(P_{HMI,ff}, \ P_{HMI,fm}) \ + \ P_{mf}$$

où $d_{n,i}$ est la statistique de test pour la détection d'une panne sur un satellite n, dans la direction i, et $P_{mf}$ est la probabilité que plus d'un signal de mesure de distance est erroné.

3. Procédé selon la revendication 2, dans lequel $P_{HMI,ff}$ est calculée conformément à la formule suivante :

$$p_{HMI,ff} = \begin{pmatrix} \max_{n \in N}\left(\left(\prod_{\substack{m=1 \\ n \neq m}}^{N} K'_m\right)\left(\sum_{i=1}^{I}\left(1 - erf\left(\frac{AL_{i} - \mu'_{Sn,i}}{\sqrt{2}\sigma'_{Sn,i}}\right)\right)\right)\right) + \\ 1 - \prod_{m=1}^{N}(p_{\mu'_m} \cdot p_{\sigma'_m}) - \sum_{m=1}^{N}(1 - p_{\mu'_m} \cdot p_{\sigma'_m})\prod_{\substack{m=1 \\ n \neq m}}^{N}(p_{\mu'_m} \cdot p_{\sigma'_m}) \end{pmatrix}$$

avec

$$\mu'_{Sn,i} = \sum_{m=1}^{N}\left\|(S_{n,i})_m\right\|_2 \mu'_m$$

et

$$\sigma'_{Sn,i} = \sum_{m=1}^{N}\left((S_{n,i})_m \sigma'_m\right)^2$$

où $AL_i$ et une limite d'alerte.

4. Procédé selon la revendication 2 ou la revendication 3, dans lequel $P_{HMI,fm}$ est calculée conformément à la formule suivante :

$$p_{HMI,fm} = \max_{n=1..N}\left(p_{HMI,fm,n}\right)$$

avec

$$p_{HMI,fm,n} = \left( \begin{array}{l} \max_{o \in N} \left( \left( \prod_{\substack{m=1 \\ n \neq m \\ o \neq m}}^{N} K'_m \right) \left( \sum_{i=1}^{I} \left( 1 - erf\left( \frac{AL_{i-}d_{n,i} - \mu'_{Sn,o,i}}{\sqrt{2}\sigma'_{Sn,o,i}} \right) \right) \right) \right) + \\ 1 - \prod_{\substack{m=1 \\ m \neq n}}^{N} \left( p_{\mu'_m} \cdot p_{\sigma'_m} \right) - \sum_{\substack{m=1 \\ m \neq n}}^{N} \left( 1 - p_{\mu'_m} \cdot p_{\sigma'_m} \right) \prod_{\substack{o=1 \\ o \neq m \\ o \neq n}}^{N} \left( p_{\mu'_o} \cdot p_{\sigma'_o} \right) \end{array} \right)$$

avec

$$\mu'_{Sn,o,i} = \sum_{m=1}^{N} \left\| \left( S_{n,o,i} \right)_m \right\|_2 \mu'_m$$

et

$$\sigma'_{Sn,o,i} = \sum_{m=1}^{N} \left( \left( S_{n,o,i} \right)_m \sigma'_m \right)^2$$

où $AL_i$ et une limite d'alerte.

5. Programme informatique mettant en oeuvre un procédé selon l'une quelconque des revendications précédentes et permettant la détermination d'un risque d'intégrité dans un GNSS lorsqu'il est exécuté par un ordinateur.

6. Support d'enregistrement stockant un programme informatique selon la revendication 5.

7. Récepteur pour signaux de mesure de distance provenant du satellite d'un GNSS, comprenant :

une mémoire stockant un programme informatique de la revendication 5, et
un processeur configuré par le programme informatique stocké pour traiter des signaux de mesure de distance reçus avec le procédé mis en oeuvre par le programme informatique.

START

S10

determining a first group of ranging signals from
received ranging signals

S12

selecting from the first group of ranging signals at
least one ranging signal

S14

determining a second group of ranging signals from
the first group by removing the selected at least one
ranging signal from the first group of ranging signals

S16

determining the integrity risk as the maximum of the
integrity risks of all possibilities

STOP

Fig. 1

$$p_{HMI,ff} = \left( \max_{n \in N} \left( \left( \prod_{\substack{m=1 \\ n \neq m}}^{N} K'_m \right) \left( \sum_{i=1}^{I} \left( 1 - \mathrm{erf} \left( \frac{AL_i - \mu'_{S_{n,i}}}{\sqrt{2}\sigma'_{S_{n,i}}} \right) \right) \right) \right) + 1 - \prod_{m=1}^{N} \left( p_{\mu'_m} \cdot p_{\sigma'_m} \right) - \sum_{m=1}^{N} \left( 1 - p_{\mu'_m} \cdot p_{\sigma'_m} \right) \prod_{\substack{n=1 \\ n \neq m}}^{N} \left( p_{\mu'_n} \cdot p_{\sigma'_n} \right) \right)$$

Fig. 2

$$p_{HMI,fm,n} = \max_{o \in N} \left( \left( \prod_{\substack{m=1 \\ n \neq m \\ o \neq m}}^{N} K'_m \right) \left( \sum_{i=1}^{I} \left( 1 - \mathrm{erf} \left( \frac{AL_i - d_{n,i} - \mu'_{S_{n,o,i}}}{\sqrt{2}\sigma'_{S_{n,o,i}}} \right) \right) \right) \right) + 1 - \prod_{\substack{m=1 \\ m \neq n}}^{N} \left( p_{\mu'_m} \cdot p_{\sigma'_m} \right) - \sum_{\substack{m=1 \\ m \neq n}}^{N} \left( 1 - p_{\mu'_m} \cdot p_{\sigma'_m} \right) \prod_{\substack{o=1 \\ o \neq m \\ o \neq n}}^{N} \left( p_{\mu'_o} \cdot p_{\sigma'_o} \right)$$

Fig. 3

**EP 2 648 018 B1**

**Patent documents cited in the description**

- EP 10006518 A

**Non-patent literature cited in the description**

- **V. OEHLER ; F. LUONGO ; J.-P. BOYERO ; R. STALFORD ; H. L. TRAUTENBERG.** The Galileo Integrity Concept. *ION GNSS 17 th International Technical Meeting of the Satellite Division,* 21 September 2004
- **KAPLAN E D.** UNDERSTANDING GPS: PRINCIPLES AND APPLICATIONS. *UNDERSTANDING GPS PRINCIPLES AND APPLICATIONS,* 01 January 1996, 306-314
- International Standards and Recommended Practices Aeronautical Telecommunications Annex 10 to the Convention on International Civil Aviation Volume I (Radio Navigation Aids) (Amendments until amendment 84 have been considered). July 2006, vol. I